# EUROPEAN PATENT APPLICATION

(11) **EP 4 796 919 A1**
(43) Date of publication of application: **26.08.2026**
(21) Application number: 24891131.5
(22) Date of filing: 11.10.2024
(51) Int. Cl.: G01N 21/88

(54) **INSPECTION SYSTEM, INSPECTION METHOD, AND ROBOT SYSTEM**

(30) Priority: 15.11.2023 JP 2023194726
(71) Applicant: KAWASAKI JUKOGYO KABUSHIKI KAISHA, Kobe-shi, Hyogo 650-8670 (JP)
(72) Inventor: SUGIMOTO, Shunichi, Kobe-shi, Hyogo 650-8670 (JP); OHNISHI, Masafumi, Kobe-shi, Hyogo 650-8670 (JP); HORIKE, Toshiki, Kobe-shi, Hyogo 650-8670 (JP); YAGINUMA, Keito, Kobe-shi, Hyogo 650-8670 (JP); HARA, Kazunori, Kobe-shi, Hyogo 650-8670 (JP)
(74) Representative: Müller-Boré & Partner Patentanwälte PartG mbB
(86) International application number: PCT/JP2024/036445
(87) International publication number: WO 2025/105089

(57) **Abstract**

An inspection system (100) according to this disclosure includes a processor (61) configured to perform a process of acquiring inspection images (21) of each of works (200) by inspecting the work (200) while moving inspectors (20) disposed on respective robots (10), and a process of integrating, as data (62a), positions of the target (201) detected from the inspection images (21).

## Description

### Technical Field

The present disclosure relates to an inspection system, an inspection method, and a robot system.

### Background Art

An inspection system is known in the art. For example, Japanese Patent Laid-Open Publication No. JP 2004-125407 discloses a defect marking apparatus for a vehicle painted surface, the defect marking apparatus including two robots, imaging devices disposed on the two robots, an image processing apparatus, and plotters. In the defect marking apparatus for a vehicle painted surface, an upper surface of a vehicle is imaged by the imaging device disposed on one of the two robots, and a side surface of the vehicle is imaged by the imaging device disposed on the other of the two robots. The image processing apparatus detects a defect of the vehicle based on the captured images. Then, the image processing apparatus projects a defect detected on the upper surface of the vehicle onto a horizontal two-dimensional projection plane, and stores the defect as a two-dimensional position in a storage. Further, the image processing apparatus projects the defect detected on the side surface of the vehicle onto a vertical two-dimensional projection plane, and stores the defect as a two-dimensional position in the storage. A plotter irradiates the upper surface of the vehicle with laser light based on data of the two-dimensional position of the defect projected onto the horizontal two-dimensional projection plane stored in the storage. Further, a plotter irradiates the side surface of the vehicle with laser light based on data of the two-dimensional position of the defect projected onto the vertical two-dimensional projection plane stored in the storage. Accordingly, a defect position of the vehicle is indicated by the laser light.

### Prior Art

### Patent Document

Patent Document 1: Japanese Patent Laid-Open Publication No. JP 2004-125407

### Summary of the Invention

However, in the defect marking apparatus for a vehicle painted surface described in Japanese Patent Laid-Open Publication No. JP 2004-125407, the data of the two-dimensional position of the defect on the upper surface of the vehicle and the data of the two-dimensional position of the defect on the side surface of the vehicle are stored separately in the storage as position data projected onto the horizontal two-dimensional projection plane and position data projected onto the vertical two-dimensional projection plane, respectively. For this reason, when defect data of the vehicle stored in the storage is referenced from, for example, another computer or the like, it is necessary to refer to each of the two-dimensional position data of the defect on the upper surface of the vehicle and the two-dimensional position data of the defect on the side surface of the vehicle. Accordingly, there is a problem in that handling of the defect data as a target of a work becomes complicated.

The present disclosure is intended to solve the above problem, and one object of the present disclosure is to provide an inspection system, an inspection method, and a robot system that facilitate handling of data of a target of a work even when the work is inspected by a plurality of robots.

The inspection system according to a first aspect of the present disclosure includes a plurality of robots; inspectors disposed on the respective robots and configured to inspect a work; and a processor configured to perform a process of acquiring inspection images of the work from the inspectors by inspecting the work while relatively moving the inspectors disposed on the respective robots with respect to the work, a process of detecting a target of the work in the inspection images, and a process of integrating, as data, positions of the target detected from the inspection images.

In the inspection system according to the first aspect of the present disclosure, as described above, the processor configured to perform a process of integrating, as data, positions of the target detected from the inspection images acquired from the inspectors disposed on the respective robots is provided. Accordingly, since positions of a target of a work inspected by the plurality of robots are integrated as data, all positions of the target of the work can be referred to by merely referring once to the integrated data from, for example, another computer or the like. As a result, even when the work is inspected by the plurality of robots, handling of data of a target of the work is facilitated.

An inspection method according to a second aspect of the present disclosure includes acquiring inspection images of works from inspectors by inspecting a work while relatively moving the inspectors disposed on respective robots with respect to the work; detecting a target of the work in the inspection images; and integrating, as data, positions of the target detected from the inspection images.

The inspection method according to the second aspect of the present disclosure includes, as described above, integrating, as data, positions of the target detected from the inspection images acquired from the inspectors disposed on the respective robots. Accordingly, since positions of a target of a work inspected by the plurality of robots are integrated as data, all positions of the target of the work can be referred to by merely referring once to the integrated data from, for example, another computer or the like. As a result, it is possible to provide an inspection method that facilitates handling of data of a target of the work even when the work is inspected by the plurality of robots.

A robot system according to a third aspect of the present disclosure includes a plurality of robots; work apparatuses disposed on the respective robots and configured to perform work on a work; inspectors disposed on the respective robots and configured to inspect the work on which the work has been performed by the work apparatuses; and a processor configured to perform a process of acquiring inspection images of the work from the inspectors by inspecting the work while relatively moving the inspectors disposed on the respective robots with respect to the work, a process of detecting a target of the work in the inspection images, and a process of integrating, as data, positions of the target detected from the inspection images.

The robot system according to the third aspect of the present disclosure includes the processor that integrates, as data, positions of the targets detected from the inspection images acquired from the inspectors disposed on the respective robots as described above. Accordingly, since positions of a target of a work inspected by the plurality of robots are integrated as data, by merely referring once to the integrated data from, for example, another computer or the like, all positions of the target of the work can be referred to. Accordingly, it is possible to provide a robot system that facilitates handling of data of a target of the work even when the work is inspected by the plurality of robots.

In the inspection system, the inspection method, and the robot system according to the present disclosure, even when the work is inspected by the plurality of robots as described above, handling of data of a target of the work can be facilitated.

### BRIEF DESCRIPTION OF THE DRAWINGS

FIG. 1 is a view showing a robot of an inspection system according to a first embodiment.
FIG. 2 is a view showing robots and a turntable of the inspection system according to the first embodiment.
FIG. 3 is a block diagram showing the inspection system according to the first embodiment.
FIG. 4 is a flowchart illustrating control processing of the inspection system according to the first embodiment.
FIG. 5 is a view illustrating generation of movement paths of the robots according to the first embodiment.
FIG. 6 is a diagram illustrating generation of coordinate transformation information in the first embodiment.
FIG. 7 is a diagram illustrating the coordinate transformation information for transforming coordinate values of an inspection coordinate system into a robot coordinate system in the first embodiment.
FIG. 8 is a diagram illustrating the coordinate transformation information for transforming coordinate values of an inspection coordinate system into a work coordinate system in the first embodiment.
FIG. 9 is a diagram showing a state in which a surface of a work is scanned and imaged by a line-type camera according to the first embodiment.
FIG. 10 is a diagram showing a state in which a work is inspected in the first embodiment.
FIG. 11 is a diagram showing overlap of inspection regions in one robot according to the first embodiment.
FIG. 12 is a diagram showing overlap of inspection regions among a plurality of robots according to the first embodiment.
FIG. 13 is a diagram illustrating an inspection image in the first embodiment.
FIG. 14 is a diagram illustrating coordinate transformation in the first embodiment.
FIG. 15 is a diagram illustrating indication of positions of the targets in a three-dimensional image of the work in the first embodiment.
FIG. 16 is a diagram illustrating indication of a position of a target on the actual work using a robot according to the first embodiment.
FIG. 17 is a block diagram showing a robot system according to a second embodiment.
FIG. 18 is a diagram showing a robot of the robot system according to the second embodiment.
FIG. 19 is a flowchart for illustrating control processing of the robot system according to the second embodiment.

### DESCRIPTION OF THE PREFERRED EMBODIMENTS

Hereinafter, embodiments that embody the present disclosure will be described with reference to the drawings.

### [First Embodiment]

### (Configuration of Inspection System)

The following description describes an overall configuration of an inspection system 100 according to a first embodiment.

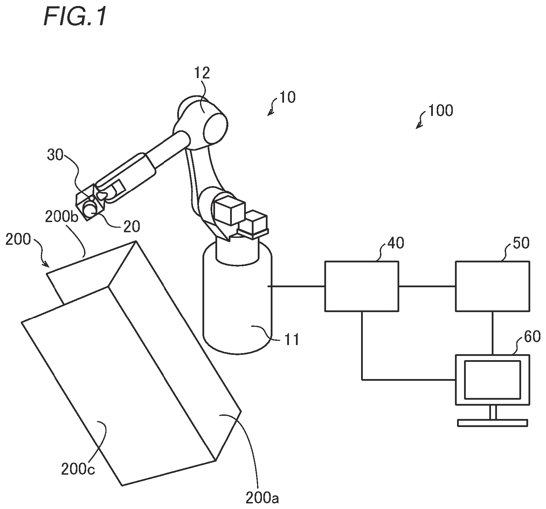

As shown in FIG. 1, the inspection system 100 is an appearance inspection system that inspects the appearance of a work 200. The work 200 is, for example, a product or a component related to an automobile, an agricultural machine, a ceramic, or a household electrical appliance. The work 200 is not particularly limited. In the first embodiment, as an example, the work 200 includes a first surface 200a, a second surface 200b intersecting the first surface 200a, and a third surface 200c intersecting the first surface 200a and facing the second surface 200b.

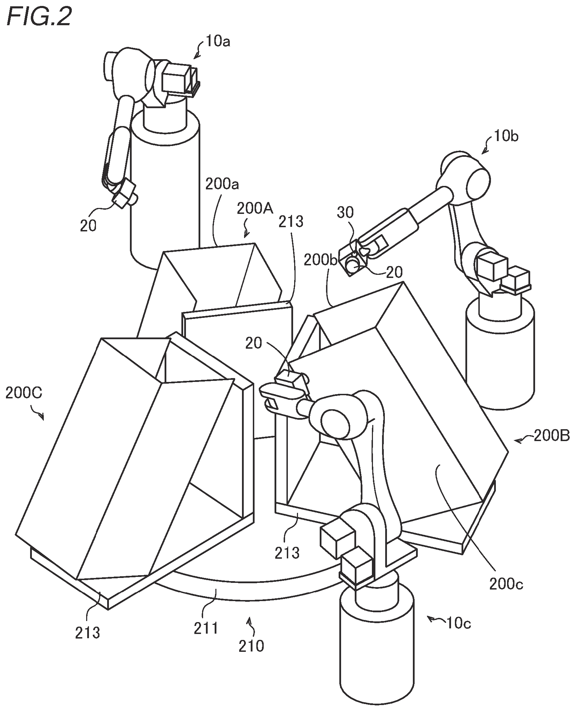

The inspection system 100 includes robots 10, an inspector 20, an indicator 30, a robot controller 40, an image processing apparatus 50, a result display device 60, and a turntable 210, which is shown in FIG. 2. The turntable 210 is an example of a work transfer apparatus.

In the first embodiment, as shown in FIG. 2, a plurality of robots 10 are provided. For example, three robots 10 are provided, and hereinafter, the three robots 10 are referred to as a robot 10a, a robot 10b, and a robot 10c. Since the three robots 10 have the same configuration, one robot 10 will be described below. As shown in FIG. 1, the robot 10 relatively moves the inspector 20 with respect to the work 200. The robot 10 is a vertical multi-joint robot. The robot 10 includes a base 11, and an arm 12 connected to the base 11. The base 11 is fixed to a mounting surface such as a floor, a wall, and a ceiling. Also, the base 11 may be attached to a movable carriage. The arm 12 includes joints. Each of the joints includes a servomotor as its driving source. A distal end of the arm 12 holds the inspector 20 and the indicator 30. The robot 10 moves the inspector 20 and the indicator 30, which are held at the distal end of the arm 12, relative to the fixed work 200 by driving the joints of the arm 12. The robot 10a, the robot 10b, and the robot 10c are examples of a first robot, a second robot, and a third robot, respectively.

The inspector 20 is disposed on each of the plurality of robots 10 and inspects the work 200. The inspector 20 is an image capturer and captures an image of the work 200. Specifically, the inspector 20 is a line-type camera, and is moved along a surface of the work 200 by the robot 10 to scan and capture an image of the surface of the work 200.

The indicator 30 is disposed on each of the plurality of robots 10 and indicates, on the work 200, a position of a target 201 that is obtained by inspection as described later. The indicator 30 is a laser light irradiator configured to irradiate the work 200 with laser light to indicate the position of the target 201.

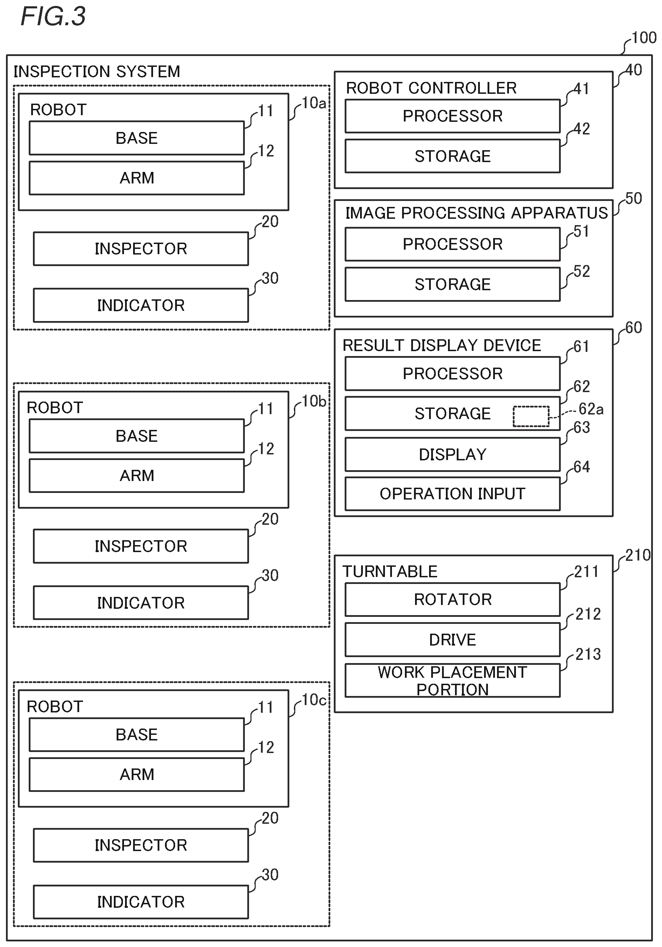

The robot controller 40 controls operation of the robot 10. As shown in FIG. 3, the robot controller 40 includes a processor 41 and a storage 42. The processor 41 includes a processor and performs various processes related to operation of the robot 10. The storage 42 includes a non-volatile memory and stores coordinate transformation information 71 and coordinate transformation information 72 described later. The robot controller 40 is, for example, provided for each of the plurality of robots 10. A single robot controller 40 common to the plurality of robots 10 may be provided.

The image processing apparatus 50 common to the plurality of robots 10 is provided. The image processing apparatus 50 may be provided for each of the plurality of robots 10. The image processing apparatus 50 performs image processing on images captured by inspectors 20. The image processing apparatus 50 controls imaging timing of the inspectors 20. The image processing apparatus 50 includes a processor 51 and a storage 52. The processor 51 includes a processor and performs various processes related to images captured by the inspectors 20 and the imaging timing of the inspectors 20. The storage 52 includes a non-volatile memory and stores inspection images 21 described later.

The result display device 60 displays a result of inspection of the work 200. The result display device 60 includes a processor 61, a storage 62, a display 63, and an operation input 64. The processor 61 includes a processor and performs various processes related to display of the inspection result of the work 200. The storage 62 includes a non-volatile memory and stores coordinate transformation information 72, a three-dimensional image of the work 200, and the like. The display 63 includes a monitor such as a liquid crystal monitor and displays a screen of the inspection result of the work 200. The operation input 64 includes input devices such as a mouse and a keyboard and receives user input. The display 63 and the operation input 64 may be integrated. That is, the display 63 and the operation input 64 may be configured by an operation-and-display unit such as a touch panel.

In the first embodiment, as shown in FIG. 2, a plurality of works 200 are placed on the turntable 210, and the turntable 210 rotates the placed works 200. Specifically, the turntable 210 includes a rotator 211, a drive 212 shown in FIG. 3, and work placement portions 213. The rotator 211 has a disk shape and rotates about an axis perpendicular to a floor surface on which the robots 10 are installed. The drive 212 rotates the turntable 210. The drive 212 is, for example, a motor. The work placement portions 213 are disposed on the rotator 211 and rotate together with the rotator 211. For example, three work placement portions 213 are provided. Each of the work placement portions 213 has, for example, an L-shape, and the work 200 is leaned thereon. The drive 212 is controlled by, for example, the processor 41 of the robot controller 40. A higher-level controller configured to control the robot controller 40 may be provided, and the drive 212 may be controlled by the higher-level controller.

Further, in the first embodiment, the plurality of robots 10 inspect different surfaces of works 200. Specifically, in the first embodiment, the robot 10a inspects a first surface 200a of a work 200. Further, the robot 10b inspects a second surface 200b of a work 200. Further, the robot 10c inspects a third surface 200c of a work 200. For example, the first surface 200a, the second surface 200b, and the third surface 200c are outer surfaces of each work 200.

### (Control Processing of Inspection System)

Control processing of the inspection system 100 is described.

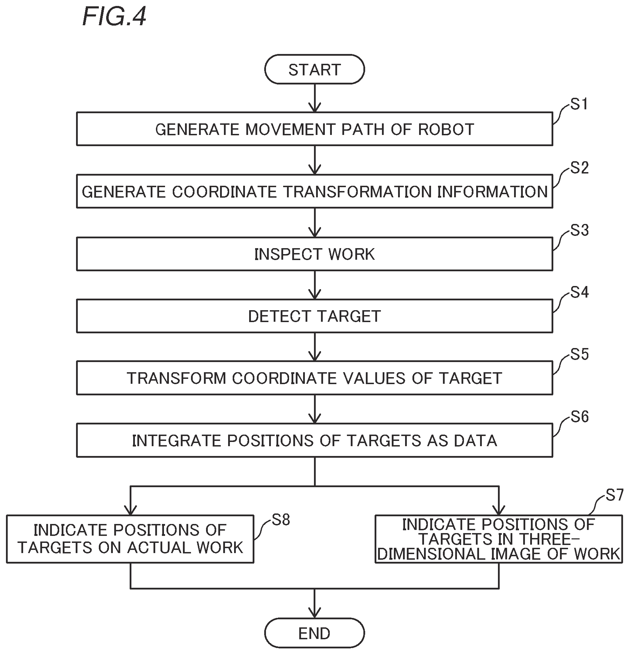

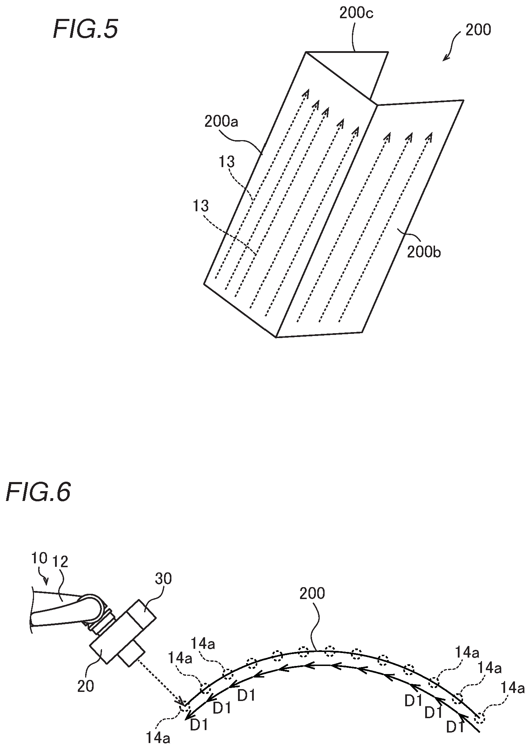

In step S1 shown in FIG. 4, as shown in FIG. 5, the processor 41 of the robot controller 40 performs a process of generating a movement path 13 of the robot 10 for inspecting the work 200 by relatively moving the inspector 20 with respect to the work 200 by the robot 10 to inspect the work 200 by the inspector 20. The movement path 13 is a path for operating the arm 12 of the robot 10, and a plurality of movement paths 13 are generated for inspecting the work 200. The movement paths 13 are generated for each of the first surface 200a, the second surface 200b, and the third surface 200c of the work 200.

For example, the processor 41 of each of the robot 10a, the robot 10b, and the robot 10c performs a process of receiving teaching of operation of the arm 12 by a user and generating the movement paths 13 for each of the robot 10a, the robot 10b, and the robot 10c based on the received teaching. Further, for example, the processor 41 of each of the robot 10a, the robot 10b, and the robot 10c performs a process of automatically generating the movement paths 13 without depending on teaching of operation of the arm 12 by a user. Further, the processor 41 performs a process of generating the movement paths 13 along a surface of the work 200 such as a curved surface.

In step S2 shown in FIG. 4, the processor 41 of each of the robot 10a, the robot 10b, and the robot 10c performs a process of generating coordinate transformation information 71 and coordinate transformation information 72 based on the generated movement paths 13. The coordinate transformation information 71 and coordinate transformation information 72 are information for converting coordinate values of an inspection coordinate system of inspection images 21 described later, which are obtained by inspecting the work 200 by the inspector 20, into coordinate values of a robot coordinate system and coordinate values of a work coordinate system, which are three-dimensional coordinate systems. The inspection coordinate system is a two-axis orthogonal coordinate system having two axes orthogonal to each other, while the three-dimensional coordinate system is a three-axis orthogonal coordinate system having three axes orthogonal to each other. Details of coordinate transformation using the coordinate transformation information 71 and coordinate transformation information 72 will be described later.

As shown in FIG. 6, the processor 41 of each of the robot 10a, the robot 10b, and the robot 10c performs a process of acquiring coordinate values of a three-dimensional coordinate system at intervals of a first distance D1 along the movement path 13 and generating coordinate transformation information 71 and coordinate transformation information 72. At this time, the processor 41 performs a process of actually moving the inspector 20 along the movement paths 13 with respect to the work 200 by the robot 10 and acquiring coordinate values of the three-dimensional coordinate system at intervals of the first distance D1. The first distance interval D1 is a distance interval of control points 14a. The processor 41 performs processing of acquiring the coordinate values of the control points 14a in the three-dimensional coordinate system at intervals of the first distance D1. When the inspector 20 is an image capturer, the control points 14a are set at imaging focal positions of the inspector 20. In addition, the imaging focal positions of the inspector 20 are set near the surface of the work 200. The control point 14a is provided to perform a process of acquiring coordinate values of the three-dimensional coordinate system.

Note that, although only one movement path 13 is illustrated in FIG. 6 for ease of illustration, the processor 41 performs a process of acquiring coordinate values of the three-dimensional coordinate system along all the movement paths 13 to generate the coordinate transformation information 71 and the coordinate transformation information 72.

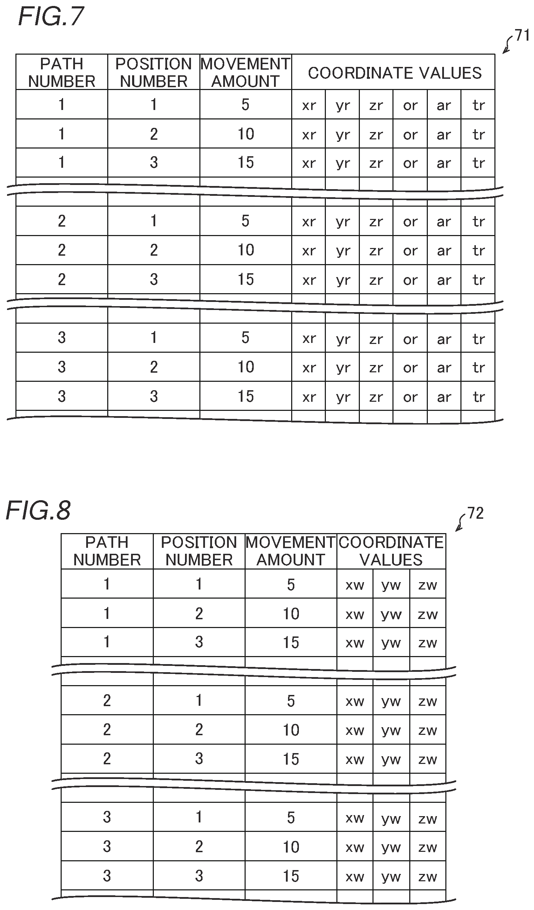

As shown in FIGS. 7 and 8, the coordinate transformation information 71 and the coordinate transformation information 72 are coordinate transformation tables that associate movement amounts of the robot 10 in directions along the movement paths 13 with coordinate values of the three-dimensional coordinate system. In FIGS. 7 and 8, path numbers represent numbers of the movement paths 13, position numbers represent numbers of the control points 14, the movement amounts represent the movement amounts of the robot 10 at the control points 14a along the movement paths 13, and the coordinate values represent the coordinate values of the control points 14a in the three-dimensional coordinate system. In other words, in the coordinate transformation information 71 and the coordinate transformation information 72, the movement amounts of the robot 10 at the control points 14a are associated with the coordinate values of the control points 14a of the three-dimensional coordinate system for each movement path 13.

As shown in FIG. 7, in coordinate transformation information 71, the three-dimensional coordinate system is a robot coordinate system related to the robot 10. The robot coordinate system is a coordinate system based on the base portion 11. The coordinate transformation information 71 is a coordinate transformation table that associates movement amounts of the robot 10 with coordinate values of the robot coordinate system. In the coordinate transformation information 71, coordinate values representing a position and an orientation of the control point 14a in the robot coordinate system are used as coordinate values.

As shown in FIG. 8, in the coordinate transformation information 72, the three-dimensional coordinate system is a work coordinate system related to the work 200. The work coordinate system is a coordinate system based on the work 200. The coordinate transformation information 72 is a coordinate transformation table that associates movement amounts of the robot 10 with coordinate values in the work coordinate system. In the coordinate transformation information 72, the coordinate values representing the position of the control point 14a in the work coordinate system are used as the coordinate values.

For example, the processor 41 acquires the coordinate values in the robot coordinate system to generate the coordinate transformation information 71, and generates the coordinate transformation information 72 based on the generated coordinate transformation information 71. Also, for example, the processor 41 generates the coordinate transformation information 72 from the coordinate transformation information 71 by converting coordinate values of the coordinate transformation information 71 in the robot coordinate system into coordinate values in the work coordinate system by using transformation information such as a transformation matrix or the like.

Also, the processor 41 performs processing of storing the coordinate transformation information 71 and the coordinate transformation information 72 in the storage 42, and performs a process of outputting the coordinate transformation information 72 to the processor 61 of the result display device 60. The processor 61 performs a process of storing coordinate transformation information 72 in the storage 62.

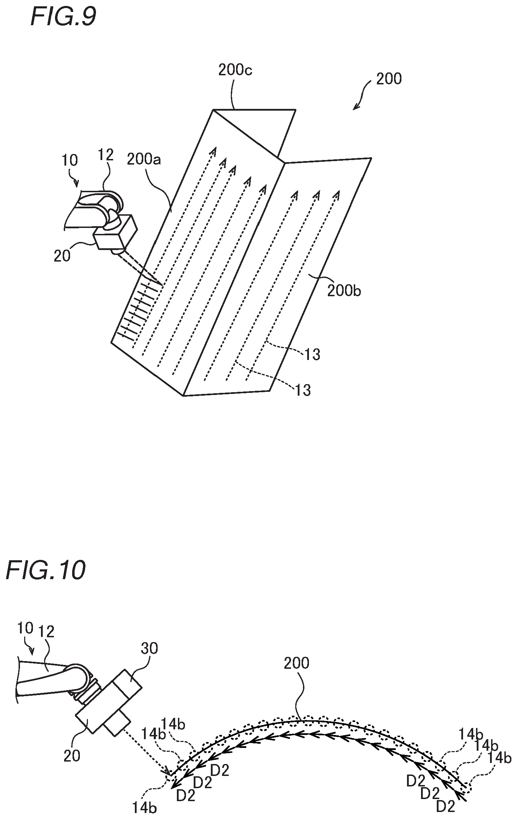

In step S3 shown in FIG. 4, as shown in FIG. 9, the processor 41 of the robot controller 40 of each of the robot 10a, the robot 10b, and the robot 10c performs a process of operating a corresponding one of the robot 10a, the robot 10b, and the robot 10c based on the movement paths 13 to inspect the work 200 by the inspector 20. Then, the processor 51 of the image processing apparatus 50 performs a process of acquiring a plurality of inspection images 21 based on output results of the inspectors 20. The inspection images 21 are captured images of a surface of the work 200 captured by the inspector 20.

As shown in FIG. 10, the processor 51 performs a process of operating the inspector 20 so as to inspect the work 200 at intervals of a second distance D2 along the movement paths 13 and acquiring the inspection images 21. Specifically, the processor 51 performs a process of operating the inspector 20 so as to capture images of the work 200 at intervals of the second distance D2 for scan imaging of the work 200. More specifically, the processor 41 performs a process of outputting pulse signals to the processor 51 at intervals of the second distance D2. The processor 51 performs a process of outputting trigger signals to the inspector 20 at intervals of the second distance D2 based on the pulse signals from the processor 41. The inspector 20 captures images of the work 200 at intervals of the second distance D2 based on the trigger signals. Here, the second distance interval D2 is a distance interval of the control points 14b. When the inspector 20 is an image capturer, the control points 14b are set at imaging focal positions of the inspector 20. In addition, the imaging focal positions of the inspector 20 are set near the surface of the work 200. The control points 14b are provided for processing of capturing images of the work 200 using the inspector 20.

Note that, although only one movement path 13 is illustrated in FIG. 10 for the sake of illustration, the processor 41 performs a process of inspecting the work 200 using the inspector 20 for all the movement paths 13. Further, the processor 51 performs a process of acquiring inspection images 21 for all the movement paths 13.

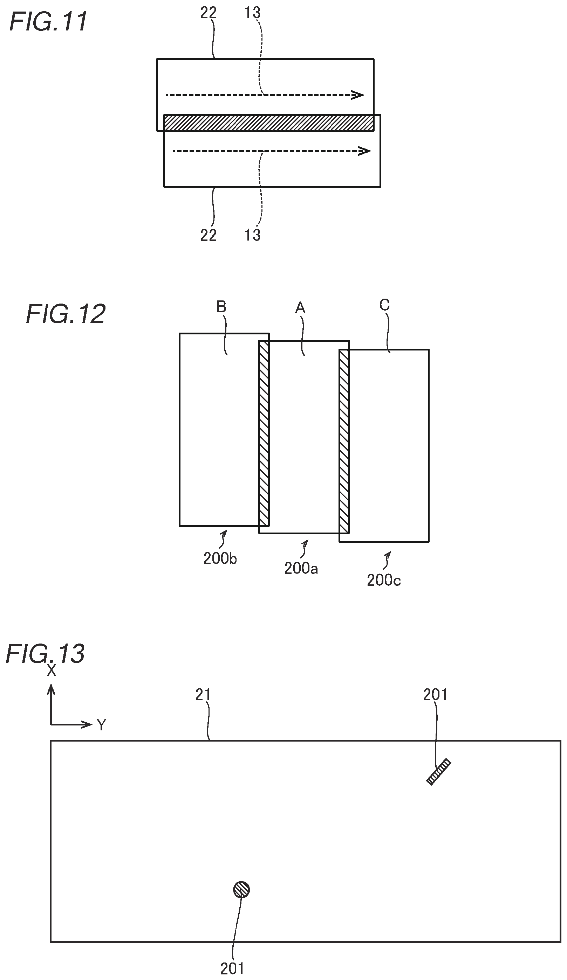

Further, as shown in FIG. 11, in each of the robot 10a, the robot 10b, and the robot 10c, inspection regions 22 of the inspector 20 are set to partially overlap between adjacent movement paths 13. In other words, the inspection region 22 of the inspector 20 for a certain movement path 13 and the inspection region 22 of the inspector 20 for another movement path 13 adjacent to the certain movement path 13 partially overlap each other. Accordingly, inspection omissions can be prevented. Here, the inspection regions 22 are imaging regions in scan imaging along the movement paths 13.

Further, in the first embodiment, as shown in FIG. 12, inspection regions of the inspectors 20 disposed on the robot 10a, the robot 10b, and the robot 10c with respect to a work 200 overlap each other. Specifically, an inspection region A of the robot 10a that inspects the first surface 200a of the work 200 and an inspection region B of the robot 10b that inspects the second surface 200b overlap each other. Further, the overlapping inspection region is arranged near a boundary between the first surface 200a and the second surface 200b. Similarly, the inspection region A of the robot 10a that inspects the first surface 200a of the work 200 and an inspection region C of the robot 10c that inspects the third surface 200c overlap each other. Further, the overlapping inspection region is arranged near a boundary between the first surface 200a and the third surface 200c. Here, in FIG. 12, the first surface 200a, the second surface 200b, and the third surface 200c are shown as planes for simplification of description.

Further, as shown in FIG. 2, a work 200A, a work 200B, and a work 200C are placed on the turntable 210. The work 200A, the work 200B, and the work 200C are the same type of work. In the first embodiment, one robot 10 among the plurality of robots 10 inspects one surface of one work 200 placed on the turntable 210, and another robot 10 among the plurality of robots 10 inspects another surface of another work 200 placed on the turntable 210, the another surface being different from the one surface. Specifically, the robot 10a inspects the first surface 200a of the work 200A placed on the turntable 210. The robot 10b and the robot 10c inspect the second surface 200b and the third surface 200c, respectively, of the work 200B placed on the turntable 210. When the turntable 210 is rotated so that the work 200A is disposed in front of the robot 10a, and the work 200B is disposed in front of the robot 10b and the robot 10c, the robot 10a, the robot 10b, and the robot 10c start inspection. Then, for example, when inspection by the robot 10a is completed first, the robot 10a waits until inspections by the robot 10b and the robot 10c are completed.

Then, in the first embodiment, the processor 41 of the robot controller 40 performs a process of rotating the turntable 210 after an inspection of the work 200A by the robot 10a is completed and inspections of the work 200B by the robot 10b and the robot 10c are completed. Accordingly, the work 200B is disposed in front of the robot 10a, and the work 200C that has not been inspected is disposed in front of the robot 10b and the robot 10c. Then, the robot 10b and the robot 10c inspect the second surface 200b and the third surface 200c, respectively, of the work 200C that has not been inspected. Further, the robot 10a inspects the first surface 200a of the work 200B for which inspections by the robot 10b and the robot 10c are completed.

In step S4 shown in FIG. 4, as shown in FIG. 13, the processor 51 of the image processing apparatus 50 performs a process of detecting a target 201 of the work 200 in a plurality of inspection images 21 acquired by the respective inspectors 20 of the plurality of robots 10. Further, the processor 51 performs a process of detecting the target 201 in the inspection images 21 for all the inspection images 21 acquired by the respective inspectors 20 of the robot 10a, the robot 10b, and the robot 10c. Further, the processor 51 performs a process of detecting the target 201 in the inspection images 21 by performing predetermined image processing on the inspection images 21. In the first embodiment, the target 201 is, for example, a defect such as a scratch, a foreign matter, a dent, and the like.

As shown in FIG. 13, an inspection coordinate system of the inspection images 21 is a two-dimensional coordinate system in which a direction along each movement path 13 is an Y-axis direction and a direction orthogonal to each movement path 13 is an X-axis direction. The processor 51 performs a process of acquiring coordinate values of the target 201 in the inspection coordinate system. That is, the processor 51 performs a process of acquiring coordinate values of an X-axis and an Y-axis of the target 201 in the inspection coordinate system. Further, the processor 51 performs a process of acquiring coordinate values of the target 201 in the inspection coordinate system for all the inspection images 21 in which the target 201 is detected. Further, the processor 51 performs a process of storing the inspection images 21, numbers of movement paths 13 corresponding to each inspection image 21, and coordinate values of the target 201 in the inspection coordinate system in the storage 52. Further, the processor 51 performs a process of outputting the numbers of the movement paths 13 corresponding to the inspection image 21 and coordinate values of the target 201 in the inspection coordinate system to the processor 41 of a robot controller 40 and the processor 61 of the result display device 60.

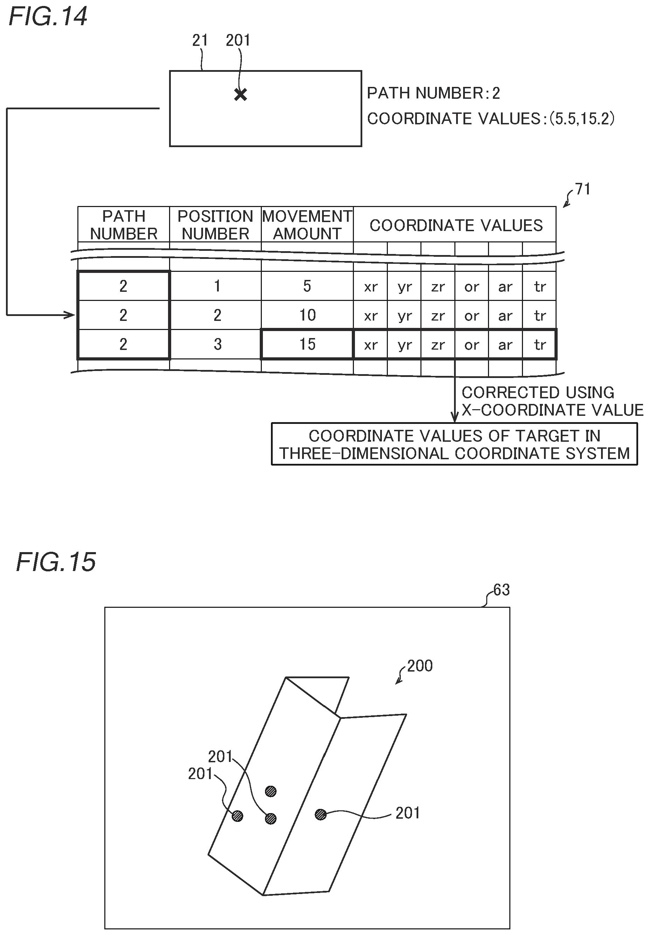

In step S5 shown in FIG. 4, as shown in FIG. 14, the processor 41 of the robot controller 40 performs a process of converting coordinate values of the target 201 in the inspection coordinate system into coordinate values of the robot coordinate system based on the coordinate transformation information 71. Further, in step S5, the processor 61 of the result display device 60 performs a process of converting coordinate values of the target 201 in the inspection coordinate system into coordinate values of the work coordinate system based on the coordinate transformation information 72. First, processing of the processor 41 will be described. The following processing of the processor 41 is performed by the processor 41 of the robot controller 40 of each of the robot 10a, the robot 10b, and the robot 10c.

As shown in FIG. 14, the processor 41 performs a process of identifying a number of the movement path 13 in coordinate transformation information 71 based on the number of the movement path 13 corresponding to the inspection image 21. Then, the processor 41 performs a process of acquiring, in the identified number of the movement path 13, a movement amount of the robot 10 in the coordinate transformation information 71 corresponding to a coordinate value of the target 201 in the inspection coordinate system in a Y-axis direction along the movement path 13. At this time, the processor 41 performs a process of acquiring a movement amount of the robot 10 closest to the coordinate value of the target 201 in the inspection coordinate system in the Y-axis direction as a corresponding movement amount of the robot 10. Then, the processor 41 performs a process of acquiring coordinate values of the robot coordinate system in the coordinate transformation information 71 corresponding to the acquired movement amount of the robot 10 in the coordinate transformation information 71. Accordingly, coordinate values of the robot coordinate system corresponding to the coordinate value of the target 201 in the inspection coordinate system in the Y-axis direction are acquired.

On the other hand, the acquired coordinate values of the robot coordinate system in coordinate transformation information 71 do not reflect a coordinate value of the target 201 in the inspection coordinate system in the X-axis direction and include a deviation corresponding thereto. For this reason, the processor 41 performs a process of correcting the acquired coordinate values of the robot coordinate system in the coordinate transformation information 71 based on the coordinate value of the target 201 in the inspection coordinate system in the X-axis direction orthogonal to the movement path 13. At this time, the processor 41 performs a process of correcting the coordinate values of the robot coordinate system in the coordinate transformation information 71 by adding the coordinate value of the target 201 in the inspection coordinate system in the X-axis direction. Accordingly, the processor 41 performs a process of acquiring coordinate values of the target 201 in the robot coordinate system. Further, the processor 41 performs a process of converting the coordinate values and acquiring coordinate values in the robot coordinate system for all the targets 201.

For example, in an example shown in FIG. 14, a number of the movement path 13 corresponding to the inspection image 21 is 2, a coordinate value of the target 201 in the X-axis direction is 5.5, and a coordinate value of the target 201 in the Y-axis direction is 15.2. In this case, the processor 41 performs a process of identifying 2 as the number of the movement path 13. Then, the processor 41 performs a process of acquiring 15 as a movement amount of the robot 10 closest to the coordinate value 15.2 of the target 201 in the Y-axis direction in the identified number 2. Then, the processor 41 performs a process of acquiring (xr, yr, zr, or, ar, tr) as coordinate values of the robot coordinate system corresponding to the movement amount 15 of the robot 10. Then, the processor 41 performs a process of adding the coordinate value 5.5 of the target 201 in the X-axis direction to the coordinate values (xr, yr, zr, or, ar, tr) of the robot coordinate system and acquiring coordinate values of the target 201 in the robot coordinate system.

The processing of the processor 41 of the robot controller 40 has been described above, and the processing of the processor 61 of the result display device 60 is similar except that the coordinate transformation information 72 is used. Further, the following processing of the processor 61 of the result display device 60 is executed for a plurality of inspection images 21 acquired by the respective inspectors 20 of the robot 10a, the robot 10b, and the robot 10c. Specifically, the processor 61 performs a process of identifying a number of the movement path 13 in the coordinate transformation information 72 based on the number of the movement path 13 corresponding to the inspection image 21. Then, the processor 61 performs a process of acquiring, in the identified number of the movement path 13, a movement amount of the robot 10 in the coordinate transformation information 72 corresponding to a coordinate value of the target 201 in the inspection coordinate system in a Y-axis direction along the movement path 13. At this time, the processor 61 performs a process of acquiring a movement amount of the robot 10 closest to the coordinate value of the target 201 in the inspection coordinate system in the Y-axis direction as a corresponding movement amount of the robot 10. Then, the processor 61 performs a process of acquiring coordinate values of the work coordinate system in the coordinate transformation information 72 corresponding to the acquired movement amount of the robot 10 in the coordinate transformation information 72. As a result, a coordinate value in the work coordinate system corresponding to the coordinate value of the target 201 in the inspection coordinate system in the Y-axis direction is acquired.

On the other hand, the coordinate values in the work coordinate system in the acquired coordinate transformation information 72 do not reflect a coordinate value of the target 201 in the X-axis direction in the inspection coordinate system, and include a corresponding deviation. For this reason, the processor 61 performs a process of correcting the acquired coordinate values of the work coordinate system in the coordinate transformation information 72 based on the coordinate value of the target 201 in the inspection coordinate system in the X-axis direction orthogonal to the movement path 13. At this time, the processor 61 performs a process of correcting the coordinate values of the work coordinate system in the coordinate transformation information 72 by adding the coordinate value of the target 201 in the inspection coordinate system in the X-axis direction. Accordingly, the processor 61 performs a process of acquiring coordinate values of the target 201 in the work coordinate system. Further, the processor 61 performs a process of converting coordinate values and acquiring coordinate values of the work coordinate system for all the targets 201.

In step S6 shown in FIG. 4, in the first embodiment, the processor 61 of the result display device 60 performs a process of integrating positions of the target 201 detected from a plurality of inspection images 21 acquired by the respective inspectors 20 of the robot 10a, the robot 10b, and the robot 10c as data 62a shown in FIG. 3. Specifically, the processor 61 integrates, into a single set of three-dimensional data 62a, coordinate values of the target 201 in the work coordinate system acquired from the plurality of inspection images 21 acquired by the respective inspectors 20 of the robot 10a, the robot 10b, and the robot 10c. The integrated data 62a is contained in, for example, one file. Further, the storage 62 of the result display device 60 stores the integrated data 62a.

Further, in the first embodiment, when positions of the target 201 detected from a plurality of inspection images 21 acquired by the respective inspectors 20 of the robot 10a, the robot 10b, and the robot 10c match, the processor 61 of the result display device 60 performs a process of handling the targets 201 having matching positions as the same target 201. As described above, the inspection region A of the robot 10a and the inspection region B of the robot 10b overlap each other. For this reason, the same target 201 may be detected by both the inspector 20 of the robot 10a and the inspector 20 of the robot 10b. In this case, coordinate values of the target 201 in the work coordinate system detected by the inspector 20 of the robot 10a and coordinate values of the target 201 in the work coordinate system detected by the inspector 20 of the robot 10b match, and as a result the processor 61 of the result display device 60 handles the target 201 having matching coordinate values in the work coordinate system as the same target 201. In practical use, even when coordinate values in the work coordinate system of a plurality of targets 201 are different from each other, if a difference between the coordinate values is equal to or less than a predetermined threshold, the processor 61 handles them as the same target 201. Then, coordinate values of one target 201 in the work coordinate system handled as the same target 201 are stored in the storage 62.

In step S7 shown in FIG. 4, as shown in FIG. 15, the processor 61 of the result display device 60 performs a process of displaying the target 201 detected from a plurality of inspection images 21 acquired by the respective inspectors 20 of the robot 10a, the robot 10b, and the robot 10c on a three-dimensional image of the work 200. Specifically, the processor 61 of the result display device 60 performs a process of indicating the position of the target 201 on the three-dimensional image of the work 200 based on coordinate values of the target 201 converted into coordinate values of the work coordinate system. That is, the processor 61 performs a process of superimposing an image indicating the position of the target 201 on the three-dimensional image of the work 200. Then, the processor 61 performs a process of displaying, on the display 63, the three-dimensional image of the work 200 on which the image indicating the position of the target 201 is superimposed. The three-dimensional image of the work 200 on which the image indicating the position of the target 201 is superimposed can be enlarged, reduced, or rotated based on an operation by a user using the operation input 64.

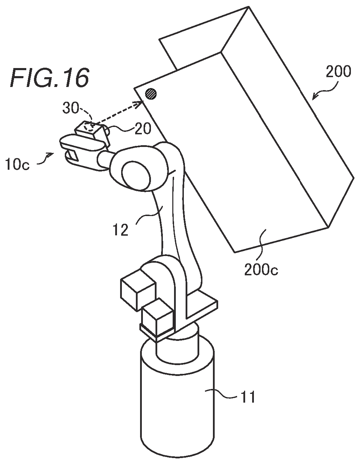

In step S8 shown in FIG. 4, as shown in FIG. 16, the processor 41 of the robot controller 40 performs a process of indicating the position of the target 201 on an actual work 200 based on the converted coordinate values of the target 201 in the three-dimensional coordinate system. Specifically, the processor 41 performs a process of operating the robot 10 based on coordinate values of the target 201 converted into coordinate values of the robot coordinate system and indicating the position of the target 201 on the actual work 200 by the indicator 30. That is, the processor 41 performs a process of operating the robot 10 and moving the indicator 30 to a specified position at which the position of the target 201 can be indicated. Then, the processor 41 performs a process of irradiating the actual work 200 with laser light from the indicator 30 in a state in which the indicator 30 is disposed at the specified position and indicating the position of the target 201 on the actual work 200. Although a state in which one robot 10c irradiates the third surface 200c of the work 200 with laser light is shown in FIG. 16, the robot 10a and the robot 10b can also irradiate the work 200 with laser light in the same manner.

### (Advantages of First Embodiment)

The inspection system 100 includes the processor 61 that performs a process of integrating, as the data 62a, positions of the target 201 detected from a plurality of inspection images 21 acquired by the inspectors 20 disposed on the respective robots 10. Accordingly, since positions of targets 201 of the work 200 inspected by the respective robots 10 are integrated as the data 62a, all positions of the targets 201 of a work 200 can be referred to by merely referring once to the integrated data 62a from, for example, another computer or the like. As a result, even when the work 200 is inspected by the respective robots 10, handling of the data 62a of the targets 201 of the work 200 can be facilitated.

The targets 201 include defects of the work 200. Accordingly, since positions of defects of the work 200 inspected by the respective robots 10 are integrated as the data 62a, handling of the data 62a of the defects of the work 200 can be facilitated.

Inspection regions of the inspectors 20 disposed on the respective robots 10 with respect to the work 200 overlap each other. Accordingly, since occurrence of a region on a surface of the work 200 that is not an inspection region is suppressed, inspection omission can be suppressed.

When positions of a target 201 detected from a plurality of inspection images 21 are the same, the processor 51 performs a process of handling the target 201 having the same position as the same target 201. Accordingly, even when the targets 201 are the same, the targets 201 can be prevented from being handled as different targets in data.

The respective robots 10 inspect different surfaces of the work 200. Accordingly, since a relatively large area of the work 200 is inspected by the respective robots 10, the work 200 can be easily inspected even when the work 200 is relatively large.

The inspection system 100 includes the turntable 210 on which a plurality of works 200 are placed and which rotates the placed works 200. One robot 10 among the robots 10 inspects one surface of one work 200 placed on the turntable 210, and another robot 10 among the robots 10 inspects another surface different from the one surface of another work 200 placed on the turntable 210. Accordingly, one work 200 can be inspected by the robots 10 by moving the work 200 by the turntable 210 without moving the robots 10. Further, since the work 200 is rotated by the turntable 210, an arrangement area of a system for moving the work 200 can be smaller than in a case in which the work 200 is one-dimensionally moved by a conveyor or the like.

The work 200 placed on the turntable 210 includes the first surface 200a, the second surface 200b intersecting the first surface 200a, and the third surface 200c intersecting the first surface 200a and facing the second surface 200b. The robots 10 include the robot 10a that inspects the first surface 200a, the robot 10b that inspects the second surface 200b, and the robot 10c that inspects the third surface 200c. Accordingly, time required for inspection can be shortened as compared with a case in which all of the first surface 200a, the second surface 200b, and the third surface 200c are inspected by one robot 10.

The processor 41 of the robot controller 40 performs a process of rotating the turntable 210 after inspections of works 200 by the robot 10a, the robot 10b, and the robot 10c are completed; the robot 10b and the robot 10c inspect the second surface 200b and the third surface 200c, respectively, of the work 200 that has not been inspected; and the robot 10a inspects the first surface 200a of the work 200 for which inspections by the robot 10b and the robot 10c have been completed. Accordingly, since inspections of the work 200 are performed by the robot 10a, the robot 10b, and the robot 10c by flow work, time required for inspections of the work 200 can be further shortened.

The processor 61 performs a process of displaying a target 201 detected from a plurality of inspection images 21 on an image of the work 200. Accordingly, a user can easily check a position of the target 201 by visually recognizing the image of the work 200.

The inspection system 100 includes the storage 62 configured to store the data 62a in which positions of a target 201 detected from a plurality of inspection images 21 are integrated. Accordingly, even when a period of time has elapsed after inspection of the work 200 is completed, the position of the target 201 can be checked by referring to the data 62a stored in the storage 62. Further, the data 62a stored in the storage 62 can be referred to from a server or the like separate from the inspection system 100.

The processor 61 performs a process of integrating positions of a target 201 detected from a plurality of inspection images 21 as the three-dimensional data 62a. Accordingly, when a work 200 is three-dimensional, positions of the target 201 can be easily integrated. Further, unlike a case in which the detected position of the target 201 is projected onto a two-dimensional plane and the position of the target 201 is acquired as a position on the two-dimensional plane, the position of the target 201 can be acquired more accurately in the three-dimensional work 200.

### [Second Embodiment]

### (Configuration of Robot System)

A configuration of a robot system 300 according to a second embodiment is described. The robot system 300 inspects a work 200 by the inspector 20 in parallel with work on the work 200 by a work apparatus 310.

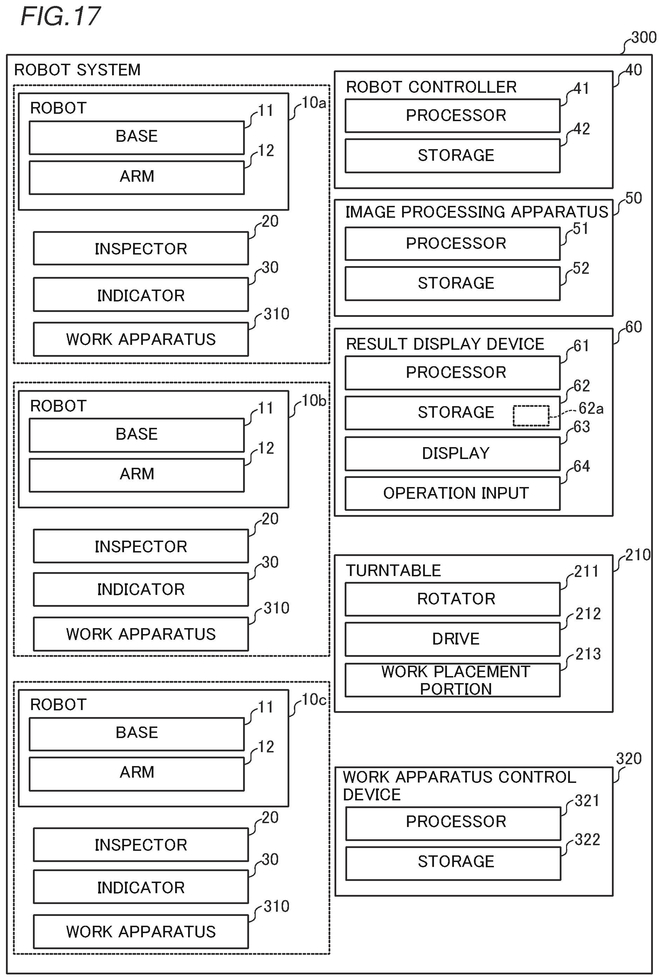

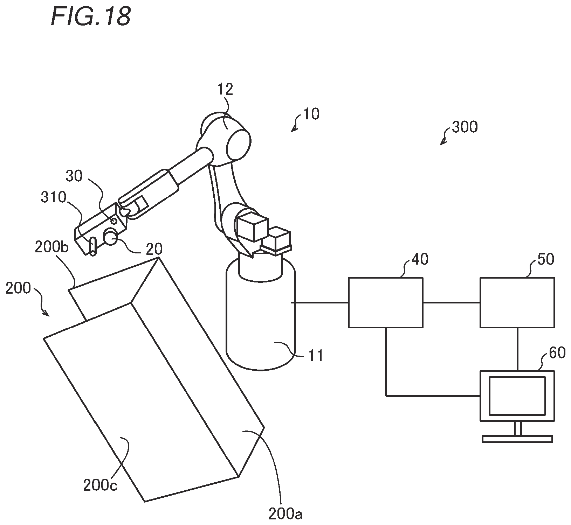

As shown in FIG. 17, the robot system 300 includes, in addition to the robots 10, the inspectors 20, the indicators 30, the robot controller 40, the image processing apparatus 50, the result display device 60, and the turntable 210 included in the inspection system 100 according to the first embodiment, work apparatuses 310 and a work apparatus control device 320. As shown in FIG. 18, a work apparatus 310 is disposed on the robot 10 and performs work on a work 200. For example, the work apparatus 310 is a paint apparatus that performs painting work on the work 200. In this case, for example, the work apparatus 310 is a paint apparatus that by inkjet, and is moved along a surface of the work 200 using the robot 10 to perform painting work on the work 200 by applying paint to the surface of the work 200. In FIG. 18, although one robot 10 is illustrated, the robot system 300 includes, for example, three robots 10 as in the inspection system 100 according to the first embodiment.

The work apparatus 310 work apparatus control device 320 shown in FIG. 17 controls timing of work by the work apparatus 310. The work apparatus control device 320 includes a processor 321 and a storage 322. The processor 321 includes a processor and performs various processes related to timing of work by the work apparatus 310. The storage 322 includes a non-volatile memory and stores various types of information such as a program for controlling timing of work by the work apparatus 310. Other configurations of the robot system 300 according to the second embodiment are the same as those of the inspection system 100 according to the first embodiment.

### (Control Processing of Robot System)

Control processing of the robot system 300 is described.

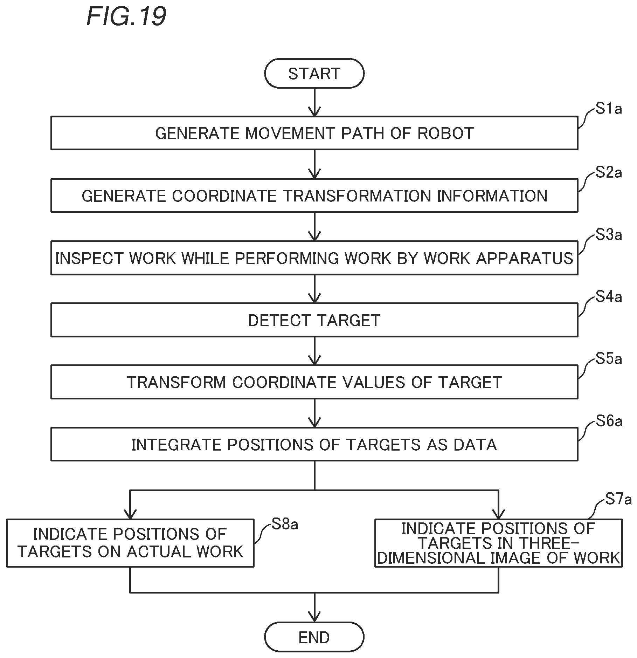

In step S1a shown in FIG. 19, similarly to step S1 of the first embodiment shown in FIG. 4, the processor 41 of the robot controller 40 performs a process of generating movement paths 13 of the robot 10 for performing work on the work 200 by the work apparatus 310 and for inspecting the work 200 by the inspector 20 by relatively moving the inspector 20 with respect to the work 200 by the robot 10.

In step S2a shown in FIG. 19, similarly to step S2 of the first embodiment shown in FIG. 4, the processor 41 of each of the robot 10a, the robot 10b, and the robot 10c performs a process of generating coordinate transformation information 71 shown in FIG. 7 and coordinate transformation information 72 shown in FIG. 8 based on the generated movement paths 13.

In step S3a shown in FIG. 19, the processor 41 of the robot controller 40 of each of the robot 10a, the robot 10b, and the robot 10c performs a process of operating the robot 10a, the robot 10b, and the robot 10c based on the movement paths 13 to inspect the work 200 by the inspector 20 while performing work on the work 200 by the work apparatus 310. Specifically, the processor 321 of the work apparatus control device 320 causes the work apparatus 310 to perform work on the work 200 at intervals of a second distance D2 along the movement paths 13, for example, as shown in FIG. 10. When the work apparatus 310 is a paint apparatus that sprays paint by inkjet, the processor 321 executes a process of causing the work apparatus 310 to spray paint at intervals of the second distance D2. More specifically, the processor 41 of the robot controller 40 performs a process of outputting pulse signals to the processor 321 of the work apparatus control device 320 at intervals of the second distance D2. The processor 321 performs a process of outputting trigger signals to the work apparatus 310 at intervals of the second distance D2 based on the pulse signals from the processor 41. The work apparatus 310 sprays paint onto the work 200 at intervals of the second distance D2 based on the trigger signals. The distance at which the paint apparatus sprays paint is not limited to the second distance D2. Further, in parallel with the process of spraying paint by the work apparatus 310, the processor 51 of the image processing apparatus 50 performs, similarly to the first embodiment, a process of operating the inspector 20 so as to inspect the work 200 at intervals of the second distance D2 along the movement paths 13 and acquiring inspection images 21. Specifically, the processor 51 performs a process of operating the inspector 20 so as to capture images the work 200 at intervals of the second distance D2 for scan imaging of the work 200.

In step S4a shown in FIG. 19, similarly to step S4 in the first embodiment, as shown in FIG. 13, the processor 51 of the image processing apparatus 50 performs a process of detecting a target 201 of the work 200 in a plurality of inspection images 21 acquired by the respective inspectors 20 of the plurality of robots 10. When the work apparatus 310 is a paint apparatus that sprays paint by inkjet, the target 201 is, for example, coating unevenness.

In step S5a shown in FIG. 19, similarly to step S5 in the first embodiment, as shown in FIG. 14, the processor 41 of the robot controller 40 performs a process of converting coordinate values of the target 201 in the inspection coordinate system into coordinate values in the robot coordinate system based on the coordinate transformation information 71. Further, in step S5a, the processor 61 of the result display device 60 performs a process of converting coordinate values of the target 201 in the inspection coordinate system into coordinate values in the work coordinate system based on the coordinate transformation information 72.

In step S6a shown in FIG. 19, similarly to step S6 in the first embodiment, the processor 61 of the result display device 60 performs a process of integrating positions of the target 201 detected from a plurality of inspection images 21 acquired by the respective inspectors 20 of the robot 10a, the robot 10b, and the robot 10c as data 62a shown in FIG. 17.

In step S7a shown in FIG. 19, similarly to step S7 in the first embodiment, the processor 61 of the result display device 60 performs a process of displaying the target 201 detected from a plurality of inspection images 21 acquired by the respective inspectors 20 of the robot 10a, the robot 10b, and the robot 10c on a three-dimensional image of the work 200 as shown in FIG. 15.

In step S8a shown in FIG. 19, similarly to step S8 of the first embodiment, the processor 41 of the robot controller 40 performs a process of indicating the position of the target 201 on an actual work 200 based on the converted coordinate values of the target 201 in the three-dimensional coordinate system as shown in FIG. 16.

### (Advantages of Second Embodiment)

Also in the second embodiment, similarly to the first embodiment, since positions of targets 201 of the work 200 inspected by the respective robots 10 are integrated as the data 62a, all positions of the targets 201 of a work 200 can be referred to by merely referring once to the integrated data 62a from, for example, another computer or the like. As a result, even when the work 200 is inspected by the respective robots 10, handling of the data 62a of the targets 201 of the work 200 can be facilitated.

The inspector 20 inspects the work 200 in parallel with work on the work 200 by the work apparatus 310. Accordingly, since work on the work 200 and inspection can be performed simultaneously, time required for work on the work 200 and inspection can be reduced.

### (Modified Embodiments)

Note that the embodiment disclosed this time must be considered as illustrative in all points and not restrictive. The scope of the present disclosure is not shown by the above description of the embodiments but by the scope of claims for patent, and all modifications (modified embodiments) within the meaning and scope equivalent to the scope of claims for patent are further included.

While the example in which the inspection system is an appearance inspection system that inspects the appearance of a work has been shown in the aforementioned first embodiment, the present disclosure is not limited to this. In the present disclosure, the inspection system may be an inspection system that inspects an inside of a work. In this case, the inspector may be an ultrasonic flaw detector that inspects the work by transmitting ultrasonic waves into the work and receiving ultrasonic waves reflected inside the work. When the ultrasonic flaw detector is used, targets such as defects inside the work can be detected.

Further, while the example in which the robot is a vertical multi-joint robot has been shown in the aforementioned first and second embodiments, the present disclosure is not limited to this. In the present disclosure, the robot may be an industrial robot other than the vertical multi-joint robot.

While the example in which the robot moves the inspector relative to the work by moving the image capturer has been shown in the aforementioned first and second embodiments, the present disclosure is not limited to this. In the present disclosure, the robot may relatively move the inspector with respect to the work by moving the work.

While the example in which the processor of the robot controller, the processor of the image processing device, and the processor of the result display device share processing to perform various types of processing has been shown in the aforementioned first and second embodiments, the present disclosure is not limited to this. In the present disclosure, the number and configuration of the processors are not particularly limited. A single processor may perform various types of processing of the aforementioned embodiments, or processors may perform various types of processing in the aforementioned embodiments. Further, the configuration of the storage is not limited. Further, configurations of the robot controller, the image processing apparatus, and the result display device are not limited. The robot controller, the image processing device, and the result display device may be integrated into a single configuration, or may be configured separately as in the aforementioned embodiments. Further, the robot controller, the image processing apparatus, and the result display device may be configured to be further separated. For example, an operation device for operating the result display device may be provided separately from the result display device.

Further, while an example has been described in which the target is a defect of the work in the aforementioned first and second embodiments, the present disclosure is not limited thereto. For example, the target may be other than a defect of the work. For example, the target may be a teaching point of operation of the robot, an inspection path along which the inspector moves, a region inspectable by the inspector, or the like.

Further, while an example has been described in which inspection ranges of inspectors disposed on respective robots overlap each other with respect to the work in the aforementioned first and second embodiments, the present disclosure is not limited thereto. For example, the inspection ranges of inspectors disposed on respective robots may not overlap each other with respect to the work. Accordingly, duplicate detection of the same target by different inspectors can be suppressed.

Further, while an example has been described in which, when positions of targets detected from a plurality of inspection images are the same, the processor performs a process of handling the targets having the same positions as the same target in the aforementioned first and second embodiments, the present disclosure is not limited thereto. For example, the processor may handle targets as different targets even when positions of the targets are the same. Then, when displaying positions of the targets on the display, the processor may display that the positions of the targets are the same. Accordingly, it is possible to suppress a case in which targets that are not identical but have substantially the same positions are handled as the same target.

Further, while an example has been described in which three robots inspect surfaces intersecting each other in the aforementioned first and second embodiments, the present disclosure is not limited thereto. For example, a relatively large surface along a horizontal plane or a relatively large curved surface may be inspected by a plurality of robots in a distributed manner.

Further, while an example has been described in which a plurality of works are placed on a turntable in the aforementioned first and second embodiments, the present disclosure is not limited thereto. For example, a plurality of works may be placed on a work transfer apparatus such as a conveyor. In this case, a plurality of robots are arranged along the conveyor. Further, while an example has been described in which, when inspection by the robot 10a is completed first, the robot 10a waits until inspections by the robot 10b and the robot 10c are completed in the aforementioned embodiments, when a plurality of works are arranged on a conveyor, the robot 10a may start inspection of a next work 200 without waiting for completion of inspections by the robot 10b and the robot 10c.

Further, while an example has been described in which a plurality of robots perform inspections on a stationary work placed on a turntable in the aforementioned first embodiment and an example has been described in which a plurality of robots perform work and inspections on a stationary work placed on a turntable in the aforementioned second embodiment, the present disclosure is not limited thereto. For example, a plurality of robots may perform inspection, or both work and inspection, on a moving work placed on a conveyor or an automated guided vehicle. For example, in a case where a work is placed on a conveyor or an automated guided vehicle and the work moves while inspectors disposed on a plurality of robots are stationary, the processor of the robot controller performs a process of outputting pulse signals to a processor of the inspector at intervals of a predetermined distance in synchronization with movement of the conveyor or the automated guided vehicle. The processor of the inspector outputs trigger signals to the inspector at intervals of the predetermined distance based on the pulse signals, and the inspector captures an image of the work at intervals of the predetermined distance based on the trigger signals. Further, the work may be stationary and a plurality of robots may be moved by a traveling axis.

Further, while an example has been described in which three robots are arranged for inspection of the work in the aforementioned first and second embodiments, the present disclosure is not limited thereto. For example, a plurality of robots other than three robots may be arranged for inspection of the work.

Further, while an example has been described in which the processor performs a process of displaying a target detected from a plurality of inspection images by superimposing the target on an image of the work displayed on the display in the aforementioned first and second embodiments, the present disclosure is not limited thereto. For example, the processor may print out, on a paper medium, the target detected by superimposing the targets on the image of the work.

Further, while an example has been described in which both a process of indicating a position of a target on an actual work and a process of indicating a position of a target on a three-dimensional image of the work are performed in the aforementioned first and second embodiments, the present disclosure is not limited thereto. In the present disclosure, only one of the process of indicating a position of a target on an actual work and the process of indicating a position of a target on a three-dimensional image of the work may be performed.

Further, while an example has been described in which the processor performs a process of displaying a target on a three-dimensional image of the work in the aforementioned first and second embodiments, the present disclosure is not limited thereto. For example, the processor may perform a process of displaying, together with a target, information indicating which robot detected the target on the display.

Further, while an example has been described in which positions of targets detected from a plurality of inspection images are integrated as data in the aforementioned first and second embodiments, the present disclosure is not limited thereto. For example, when processing such as painting is performed on a work by a plurality of robots, information indicating which robot performed processing on a region in which a detected target exists may be associated with the position of the target and integrated as data.

Further, while an example has been described in which the processor performs a process of integrating positions of targets detected from a plurality of inspection images as three-dimensional data in the aforementioned first and second embodiments, the present disclosure is not limited thereto. For example, when a surface of a plate-shaped work is inspected by a plurality of robots, positions of detected targets are integrated as two-dimensional data.

Further, while an example has been described in which the work 200A, the work 200B, and the work 200C are the same type of work in the aforementioned first and second embodiments, the present disclosure is not limited thereto. For example, the work 200A, the work 200B, and the work 200C may be different types of works from each other. Further, the work 200A, the work 200B, and the work 200C may be of the same type of product, or may be of different types of products.

Further, while an example has been described in which the robot 10c that inspected the work 200 irradiates a position of a target 201 of an actual work 200 with laser light as shown in FIG. 16 in the aforementioned first and second embodiments, the present disclosure is not limited thereto. For example, a robot used in a process subsequent to an inspection process of the work 200 may irradiate the position of the target 201 of the work 200 with laser light.

Further, while an example has been described in which one robot 10 among the plurality of robots 10 inspects one surface of one work 200 placed on the turntable 210, and another robot 10 among the plurality of robots 10 inspects another surface of another work 200 placed on the turntable 210, the another surface being different from the one surface in the aforementioned first and second embodiments, the present disclosure is not limited thereto. For example, a plurality of robots 10 may inspect the same surface of the work 200.

Further, while an example has been described in which the inspector 20 inspects the work 200 in parallel with work performed on the work 200 by the work apparatus 310 in the aforementioned second embodiment, the present disclosure is not limited thereto. For example, the inspector 20 may inspect the work 200 after all processing by the work apparatus 310 on the work 200 is completed.

Further, while an example has been described in which the work apparatus is a paint apparatus in the aforementioned second embodiment, the present disclosure is not limited thereto. For example, the work apparatus may be a dispenser that applies sealant to the work. Further, the work apparatus may be an attaching apparatus that attaches a sealing material or a tape material to the work. Further, the work apparatus may be a polishing apparatus that performs polishing, deburring, grinding, buffing, and the like on the work. Further, the work apparatus may be a sewing apparatus that performs sewing on the work. Further, the work apparatus may be an applier that applies a highly viscous liquid such as sauce, mayonnaise, or chocolate to the work. Further, the work apparatus may be a washer that washes a work such as a car.

Functions of elements disclosed in this specification can be realized by a circuit or processing circuit including a general purpose processor, a dedicated processor, an integrated circuit, ASIC (Application Specific Integrated Circuits), a conventional circuit and/or combination of them configured or programmed to realize the disclosed functions. A processor is considered a processing circuit or circuits because it contains transistors and other circuitry. In the present disclosure, a circuit, a unit, or a means is hardware that performs an enumerated function or is hardware programmed to perform an enumerated function. The hardware may be the hardware disclosed herein or any other known hardware that is programmed or configured to perform the enumerated functions. When hardware is considered a type of circuit in a processor, a circuit, means, or unit is a combination of hardware and software, and the software is used in the configuration of hardware and/or processors.

### [Embodiments]

The aforementioned exemplary embodiments are concrete examples of the following Embodiments.

### (Embodiment 1)

An inspection system includes a plurality of robots; inspectors disposed on the respective robots and configured to inspect a work; and a processor configured to perform a process of acquiring inspection images of the work from the inspectors by inspecting the work while relatively moving the inspectors disposed on the respective robots with respect to the work, a process of detecting a target of the work in the inspection images, and a process of integrating, as data, positions of the target detected from the inspection images.

### (Embodiment 2)

In the inspection system according to Embodiment 1, the target includes a defect of the work.

### (Embodiment 3)

In the inspection system according to Embodiment 1 or 2, inspection regions of the inspectors disposed on the respective robots with respect to the work overlap each other.

### (Embodiment 4)

In the inspection system according to any one of Embodiments 1 to 3, the processor is configured to perform a process of handling targets having matching positions as an identical target when positions of the targets detected from the inspection images match.

### (Embodiment 5)

In the inspection system according to any one of Embodiments 1 to 4, the plurality of robots inspect different surfaces of the work.

### (Embodiment 6)

In the inspection system according to Embodiment 5, a work transfer apparatus on which a plurality of works are placed and that is configured to convey the placed works is further provided, one of the plurality of robots inspects one surface of one work placed on the work transfer apparatus, and another of the plurality of robots inspects another surface of another work placed on the work transfer apparatus, the another surface being different from the one surface.

### (Embodiment 7)

In the inspection system according to Embodiment 6, the work transfer apparatus includes a turntable configured to rotate the works placed thereon.

### (Embodiment 8)

In the inspection system according to Embodiment 7, each of the works placed on the turntable includes a first surface, a second surface intersecting the first surface, and a third surface intersecting the first surface and facing the second surface; and the plurality of robots include a first robot configured to inspect the first surface, a second robot configured to inspect the second surface, and a third robot configured to inspect the third surface.

### (Embodiment 9)

In the inspection system according to Embodiment 8, the processor is configured to perform a process of rotating the turntable after inspections of the work by the first robot, the second robot, and the third robot have been completed, the second robot and the third robot inspect the second surface and the third surface of the work that has not been inspected, and the first robot inspects the first surface of the work that has been inspected by the second robot and the third robot.

### (Embodiment 10)

In the inspection system according to any one of Embodiments 1 to 9, the processor is configured to perform a process of displaying, on an image of the work, the target detected from the inspection images.

### (Embodiment 11)

In the inspection system according to any one of Embodiments 1 to 10, further comprising a storage configured to store the data in which positions of the target detected from the inspection images are integrated.

### (Embodiment 12)

In the inspection system according to any one of Embodiments 1 to 11, the processor is configured to perform a process of integrating, as three-dimensional data, the positions of the target detected from the inspection images.

### (Embodiment 13)

An inspection method comprising: acquiring inspection images of works from inspectors by inspecting a work while relatively moving the inspectors disposed on respective robots with respect to the work; detecting a target of the work in the inspection images; and integrating, as data, positions of the target detected from the inspection images.

### (Embodiment 14)

A robot system includes a plurality of robots; work apparatuses disposed on the respective robots and configured to perform work on a work; inspectors disposed on the respective robots and configured to inspect the work on which the work has been performed by the work apparatuses; and a processor configured to perform a process of acquiring inspection images of the work from the inspectors by inspecting the work while relatively moving the inspectors disposed on the respective robots with respect to the work, a process of detecting a target of the work in the inspection images, and a process of integrating, as data, positions of the target detected from the inspection images.

### (Embodiment 15)

In the robot system according to Embodiment 14, the inspectors inspect the work in parallel with work on the work by the work apparatuses.

## Claims

1. An inspection system comprising:
a plurality of robots;
inspectors disposed on the respective robots and configured to inspect a work; and
a processor configured to perform
a process of acquiring inspection images of the work from the inspectors by inspecting the work while relatively moving the inspectors disposed on the respective robots with respect to the work,
a process of detecting a target of the work in the inspection images, and
a process of integrating, as data, positions of the target detected from the inspection images.

2. The inspection system according to claim 1, wherein the target includes a defect of the work.

3. The inspection system according to claim 1, wherein inspection regions of the inspectors disposed on the respective robots with respect to the work overlap each other.

4. The inspection system according to claim 1, wherein the processor is configured to perform a process of handling targets having matching positions as an identical target when positions of the targets detected from the inspection images match.

5. The inspection system according to claim 1, wherein the plurality of robots inspect different surfaces of the work.

6. The inspection system according to claim 5, further comprising a work transfer apparatus on which a plurality of works are placed and that is configured to convey the placed works, wherein
one of the plurality of robots inspects one surface of one work placed on the work transfer apparatus, and
another of the plurality of robots inspects another surface of another work placed on the work transfer apparatus, the another surface being different from the one surface.

7. The inspection system according to claim 6, wherein the work transfer apparatus includes a turntable configured to rotate the works placed thereon.

8. The inspection system according to claim 7, wherein
each of the works placed on the turntable includes
a first surface,
a second surface intersecting the first surface, and
a third surface intersecting the first surface and facing the second surface; and
the plurality of robots include
a first robot configured to inspect the first surface,
a second robot configured to inspect the second surface, and
a third robot configured to inspect the third surface.

9. The inspection system according to claim 8, wherein
the processor is configured to perform a process of rotating the turntable after inspections of the works by the first robot, the second robot, and the third robot have been completed;
the second robot and the third robot inspect the second surface and the third surface of the work that has not been inspected; and
the first robot inspects the first surface of the work that has been inspected by the second robot and the third robot.

10. The inspection system according to claim 1, wherein the processor is configured to perform a process of displaying, on an image of the work, the target detected from the inspection images.

11. The inspection system according to claim 1, further comprising a storage configured to store the data in which positions of the target detected from the inspection images are integrated.

12. The inspection system according to claim 1, wherein the processor is configured to perform a process of integrating, as three-dimensional data, the positions of the target detected from the inspection images.

13. An inspection method comprising:
acquiring inspection images of works from inspectors by inspecting a work while relatively moving the inspectors disposed on respective robots with respect to the work;
detecting a target of the work in the inspection images; and
integrating, as data, positions of the target detected from the inspection images.

14. A robot system comprising:
a plurality of robots;
work apparatuses disposed on the respective robots and configured to perform work on a work;
inspectors disposed on the respective robots and configured to inspect the work on which the work has been performed by the work apparatuses; and
a processor configured to perform
a process of acquiring inspection images of the work from the inspectors by inspecting the work while relatively moving the inspectors disposed on the respective robots with respect to the work,
a process of detecting a target of the work in the inspection images, and
a process of integrating, as data, positions of the target detected from the inspection images.

15. The robot system according to claim 14, wherein the inspectors inspect the work in parallel with work on the work by the work apparatuses.
